# FASCICULE DE BREVET EUROPEEN

(11) **EP 3 124 693 B1**
(45) Date de publication et mention de la délivrance du brevet: **17.10.2018**
(21) Numéro de dépôt: 16181766.3
(22) Date de dépôt: 28.07.2016
(51) Int. Cl.: D21C 7/00, D21C 11/00, C10G 3/00

(54) **DISPOSITIF ET PROCEDE DE TRAITEMENT DE LA LIQUEUR NOIRE PROVENANT DE LA PREPARATION DE PATE A PAPIER PAR LIQUEFACTION HYDROTHERMALE**
VORRICHTUNG UND VERFAHREN ZUR BEHANDLUNG VON SCHWARZLAUGE VON HERSTELLUNG VON HOLZSTOFF DURCH HYDROTHERMALE VERFLÜSSIGUNG
APPARATUS AND PROCESS FOR THE TREATMENT OF BLACK LIQUOR FROM MANUFACTURIN OF PAPER PULP BY HYDROTHERMAL LIQUEFACTION

(30) Priorité: 31.07.2015 FR 1557351
(43) Date de publication de la demande: 01.02.2017
(73) Titulaire: COMMISSARIAT À L'ÉNERGIE ATOMIQUE ET AUX ÉNERGIES ALTERNATIVES, 75015 Paris (FR)
(72) Inventeur: HUET, Marion, 38000 GRENOBLE (FR); LACHENAL, Dominique, 38130 ECHIROLLES (FR); ROUBAUD, Anne, 38690 CHABONS (FR)
(74) Mandataire: Cabinet Laurent & Charras

(56) Documents cités:
- WO-A1-2006/037860
- WO-A2-91/05103
- WO-A2-2012/091906
- ELLIOTT DOUGLAS C ET AL: "Hydrothermal liquefaction of biomass: Developments from batch to continuous process", BIORESOURCE TECHNOLOGY, vol. 178, 13 octobre 2014 (2014-10-13), pages 147-156, XP029125337, ISSN: 0960-8524, DOI: 10.1016/J.BIORTECH.2014.09.132
- SAQIB SOHAIL TOOR ET AL: "Hydrothermal liquefaction of biomass: A review of subcritical water technologies", ENERGY, PERGAMON PRESS, OXFORD, GB, vol. 36, no. 5, 6 mars 2011 (2011-03-06), pages 2328-2342, XP028204307, ISSN: 0360-5442, DOI: 10.1016/J.ENERGY.2011.03.013 [extrait le 2011-03-15]

## Description

### DOMAINE DE L'INVENTION

La présente invention concerne un dispositif et un procédé permettant de traiter la liqueur noire issue de la fabrication de pâte à papier. Le traitement de la liqueur noire est réalisé par liquéfaction hydrothermale.

Le domaine d'utilisation de l'invention concerne notamment l'industrie papetière.

### ETAT ANTERIEUR DE LA TECHNIQUE

De manière générale, la préparation de la pâte à papier consiste à séparer les éléments constituant le bois, et plus particulièrement à isoler les fibres cellulosiques des autres composants (principalement la lignine du bois).

Il peut s'agir d'un procédé alcalin de traitement du bois, par exemple par cuisson en présence d'une solution appelée « liqueur blanche ». La liqueur blanche est généralement constituée d'eau, de soude, et éventuellement d'une source de soufre comme le sulfure de sodium. Le traitement alcalin du bois est généralement réalisé à une température comprise entre 150 et 180°C, et à une pression comprise entre 7 et 9 bars. C'est notamment le cas pour la préparation de la pâte à papier de type Kraft.

A l'issue de ce traitement, les fibres riches en cellulose forment la pâte à papier, alors que les résidus de la cuisson forment une phase aqueuse appelée « liqueur noire ». La liqueur noire contient une grande partie de la lignine du bois, éventuellement dans un état dégradé, une partie des hémicelluloses, mais aussi de la cellulose dégradée et des dérivés des réactifs de cuisson présents dans la liqueur blanche (carbonate de sodium...).

Typiquement, la liqueur noire est recyclée en étant concentrée, puis brûlée dans une chaudière de type Tomlinson. La combustion de la liqueur noire fournit de la chaleur et de la vapeur pouvant être utilisées dans le procédé de préparation de la pâte à papier.

Dans un procédé alcalin, les résidus de la combustion de la liqueur noire sont généralement traités de manière à récupérer le sodium ainsi que le soufre provenant des réactifs initialement présents dans la liqueur blanche.

Ce type de procédé alcalin présente de nombreux inconvénients, parmi lesquels :
- le coût d'installation et de maintenance de la chaudière permettant la combustion de la liqueur noire ;
- le faible rendement énergétique de la combustion de la liqueur noire (moins de 40%) ; et
- l'impossibilité de désengorger la chaudière de combustion de la liqueur noire pour augmenter la cadence de production de la pâte à papier.

Il est possible d'extraire les hémicelluloses préalablement à la cuisson du bois. Ce prétraitement est particulièrement intéressant, étant donné que les hémicelluloses peuvent constituer une source de sucres, d'oligomères ou de polymères utilisables dans la fabrication de bio-produits (tensio actifs...), de bio-carburants (éthanol...) ou de biomatériaux.

D'autre part, l'extraction préalable des hémicelluloses facilite la préparation de la pâte à papier, car elle permet de s'affranchir de la présence de soufre.

D'autres procédés de valorisation de la liqueur noire ont été étudiés, par exemple pour valoriser chimiquement la lignine de la liqueur noire. Le document US 2,399,607 décrit la formation de vanilline par oxydation en voie humide (OVH) de la liqueur noire.

Le document EP 0 251 533 décrit l'oxydation en voie humide d'une partie seulement de la liqueur noire préalablement aux étapes d'évaporation et de combustion dans la chaudière. Dans ce procédé, la matière organique de la partie de la liqueur noire traitée est détruite à plus de 90%. La liqueur noire oxydée est ensuite mélangée à la liqueur noire restante pour être traitée selon le procédé conventionnel (concentration + combustion). La charge organique de la liqueur noire est ainsi diminuée, ce qui permet de désengorger la chaudière de combustion de la liqueur noire.

Quoi qu'il en soit, ces solutions ne sont pas entièrement satisfaisantes.

La présente invention permet de combiner la valorisation des composés organiques contenus dans la liqueur noire et le désengorgement de la chaudière de combustion de la liqueur noire, et ce, sans impacter la régénération des réactifs de la cuisson du bois, c'est-à-dire la soude dans un procédé alcalin.

### EXPOSE DE L'INVENTION

Le Demandeur a mis au point un dispositif et un procédé permettant, dans une usine de fabrication de pâte à papier, de :
- valoriser chimiquement et énergétiquement les composés organiques contenus dans la liqueur noire ;
- désengorger la chaudière conventionnellement utilisée pour brûler la liqueur noire ;
- recycler l'eau utilisée dans la fabrication de la pâte à papier ;
- régénérer le sodium provenant du traitement alcalin de cuisson du bois.

Ces avantages sont obtenus grâce à l'intégration d'une unité de liquéfaction hydrothermale dans une installation conventionnelle de valorisation de la liqueur noire au sein d'une usine de pâte à papier.

Plus précisément, la présente invention concerne un dispositif de préparation de pâte à papier comprenant :
- une unité de cuisson des constituants du bois, comprenant une première entrée E₁ₐ, une deuxième entrée E_{1b}, une première sortie S₁ₐ et une deuxième sortie S_{1b} ;
- une unité de liquéfaction hydrothermale comprenant :
   ▪ une entrée E₁₂ connectée à la deuxième sortie S_{1b} de l'unité de cuisson ;
   ▪ une première sortie S₁₂ₐ ;
   ▪ une deuxième sortie S_{12b} ;
- une ligne de connexion C₁₋₁₂ entre la sortie S_{1b} et l'entrée E₁₂ ;
- une unité de séparation en aval de la sortie S_{12b} de l'unité de liquéfaction hydrothermale, comprenant :
   ▪ une entrée E₁₇ connectée à la sortie S_{12b} de l'unité de liquéfaction hydrothermale ;
   ▪ une première sortie S₁₇ₐ ;
   ▪ une deuxième sortie S_{17b} ;
- une ligne de connexion C₁₂₋₁₇ entre la sortie S_{12b} et l'entrée E₁₇.
- une unité de caustification (9) comprenant une entrée E₉ de la phase aqueuse (16) et une sortie S₉ d'une liqueur blanche (11), la sortie S₉ étant connectée à la deuxième entrée E_{1b} de l'unité (1) de cuisson ;
- une ligne de connexion C₁₇₋₉ entre la sortie S_{17b} et l'entrée E₉ ;
- une ligne de connexion C₉₋₁ entre la sortie S₉ et l'entrée E_{1b}.

Ainsi, la présente invention concerne un dispositif de préparation de pâte à papier comprenant :
- une unité de cuisson des constituants du bois dans laquelle les constituants du bois sont séparés en deux fractions :
   ∘ de la pâte à papier,
   ∘ de la liqueur noire,
      l'unité de cuisson comprenant une première entrée E₁ₐ par laquelle du bois est introduit, une deuxième entrée E_{1b} par laquelle de la liqueur blanche est introduite, une première sortie S₁ₐ permettant d'évacuer la pâte à papier et une deuxième sortie S_{1b} permettant d'évacuer la liqueur noire ;
- une unité de liquéfaction hydrothermale permettant de traiter au moins une partie de la liqueur noire, et comprenant :
   ▪ une entrée E₁₂ de la liqueur noire, connectée à la deuxième sortie S_{1b} de l'unité de cuisson ;
   ▪ une première sortie S₁₂ₐ d'une phase organique issue de la liquéfaction hydrothermale ;
   ▪ une deuxième sortie S_{12b} d'une phase aqueuse issue de la liquéfaction hydrothermale et contenant des molécules organiques ;
- une ligne de connexion C₁₋₁₂ entre la sortie S_{1b} et l'entrée E₁₂ ;
- une unité de séparation en aval de la sortie S_{12b} de l'unité de liquéfaction hydrothermale, l'unité de séparation permettant de séparer les molécules organiques contenues dans la phase aqueuse issue de la liquéfaction hydrothermale, et comprenant :
   ▪ une entrée E₁₇ de la phase aqueuse issue de la liquéfaction hydrothermale, connectée à la sortie S_{12b} de l'unité de liquéfaction hydrothermale ;
   ▪ une première sortie S₁₇ₐ des molécules organiques ;
   ▪ une deuxième sortie S_{17b} d'une phase aqueuse ;
- une ligne de connexion C₁₂₋₁₇ entre la sortie S_{12b} et l'entrée E₁₇.

La ligne de connexion C₁₋₁₂ entre la sortie S_{1b} et l'entrée E₁₂ permet de diriger au moins une partie de la liqueur noire issue de l'unité de cuisson vers l'unité de liquéfaction hydrothermale.

La ligne de connexion C₁₂₋₁₇ entre la sortie S_{12b} et l'entrée E₁₇ permet de diriger la phase aqueuse contenant des molécules organiques, qui est issue de la liquéfaction hydrothermale de liqueur noire, vers l'unité de séparation.

Selon un mode de réalisation particulier de l'invention, ce dispositif comprend :
- une unité de cuisson des constituants du bois, comprenant une première entrée E₁ₐ, une deuxième entrée E_{1b}, une première sortie S₁ₐ et une deuxième sortie S_{1b} ;
- une unité d'évaporation en aval de la sortie S_{1b} de l'unité de cuisson, comprenant une entrée E₅ et une sortie S₅ ;
- une ligne de connexion C₁₋₅ entre la sortie S_{1b} et l'entrée E₅ ;
- une chaudière, notamment de type Tomlinson, en aval de la sortie S₅ de l'unité d'évaporation, comprenant une entrée E₆ et une sortie S₆ ;
- une ligne de connexion C₅₋₆ entre la sortie S₅ et l'entrée E₆ ;
- une unité de caustification en aval de la sortie S₆ de la chaudière, comprenant une entrée E₉ de la phase aqueuse (16) et une sortie S₉, la sortie S₉ étant connectée à la deuxième entrée E_{1b} de l'unité de cuisson ;
- une ligne de connexion C₆₋₉ entre la sortie S₆ et l'entrée E₉ ;
- une ligne de connexion C₉₋₁ entre la sortie S₉ et l'entrée E_{1b} ;
- une unité de liquéfaction hydrothermale comprenant :
   ▪ une entrée E₁₂ connectée à la deuxième sortie S_{1b} de l'unité de cuisson ;
   ▪ une première sortie S₁₂ₐ connectée à l'entrée E₆ de la chaudière ;
   ▪ une deuxième sortie S_{12b} ;
- une ligne de connexion C₁₋₁₂ entre la sortie S_{1b} et l'entrée E₁₂ ;
- une ligne de connexion C₁₂₋₆ entre la sortie S₁₂ₐ et l'entrée E₆ ;
- une unité de séparation en aval de la sortie S_{12b} de l'unité de liquéfaction hydrothermale, comprenant :
   ▪ une entrée E₁₇ connectée à la sortie S_{12b} de l'unité de liquéfaction hydrothermale ;
   ▪ une première sortie S₁₇ₐ ;
   ▪ une deuxième sortie S_{17b} connectée à l'entrée E₉ de l'unité de caustification ;
- une ligne de connexion C₁₂₋₁₇ entre la sortie S_{12b} et l'entrée E₁₇ ;
- une ligne de connexion C₁₇₋₉ entre la sortie S_{17b} et l'entrée E₉.

L'unité d'évaporation, en aval de la sortie S_{1b} de l'unité de cuisson, permet de concentrer la liqueur noire. Elle comprend une entrée E₅ de la liqueur noire issue de l'unité de cuisson et une sortie S₅ de la liqueur noire concentrée dans l'unité d'évaporation.

La chaudière, en aval de la sortie S₅ de l'unité d'évaporation, permet de brûler la liqueur noire concentrée Elle comprend une entrée E₆ de la liqueur noire concentrée et une sortie S₆ de résidus de combustion de la liqueur noire concentrée dans la chaudière.

L'unité de caustification, en aval de la sortie S₆ de la chaudière, comprend une entrée E₉ d'une liqueur verte contenant les résidus de combustion de la liqueur noire concentrée dans la chaudière. Elle comprend également une sortie S₉ d'une liqueur blanche, la sortie S₉ étant connectée à la deuxième entrée E_{1b} de l'unité de cuisson.

La ligne de connexion C₁₋₅ entre la sortie S_{1b} et l'entrée E₅ permet de diriger la partie de la liqueur noire issue de l'unité de cuisson (mais non dirigée vers l'unité de liquéfaction hydrothermale) vers l'unité d'évaporation.

La ligne de connexion C₅₋₆ entre la sortie S₅ et l'entrée E₆ permet de diriger la liqueur noire concentrée issue de l'unité d'évaporation vers la chaudière.

La ligne de connexion C₆₋₉ entre la sortie S₆ et l'entrée E₉ permet de diriger les résidus de combustion issus de la chaudière vers l'unité de caustification, éventuellement après dilution pour former une liqueur verte.

La ligne de connexion C₉₋₁ entre la sortie S₉ et l'entrée E_{1b} permet de diriger la liqueur blanche issue de l'unité de caustification vers l'unité de cuisson.

La ligne de connexion C₁₂₋₆ entre la sortie S₁₂ₐ et l'entrée E₆ permet de diriger la phase organique, qui est issue de la liquéfaction hydrothermale de liqueur noire, vers la chaudière, en aval de l'unité d'évaporation.

La ligne de connexion C₁₇₋₉ entre la sortie S_{17b} et l'entrée E₉ permet de diriger la phase aqueuse issue de l'unité de séparation vers l'unité de caustification.

Dans l'unité de cuisson des constituants du bois, le bois est introduit par la première entrée E₁ₐ. Le bois peut être du bois préhydrolysé ou non. La deuxième entrée E_{1b} permet d'introduire la liqueur blanche, issue d'un cycle de recyclage de la liqueur noire produite.

La première sortie S₁ₐ permet d'évacuer la pâte à papier résultant de la cuisson du bois. La deuxième sortie S_{1b} permet d'évacuer la liqueur noire produite lors de la cuisson du bois.

La ligne de connexion C₁₋₁₂ peut directement relier la sortie S_{1b} et l'entrée E₁₂. Elle peut également relier la sortie S_{1b} et l'entrée E₁₂ via une dérivation de la ligne de connexion C₁₋₅. En d'autres termes, la sortie S_{1b} et l'entrée E₁₂ peuvent être directement connectées via la ligne de connexion C₁₋₁₂ ou indirectement via les lignes de connexion C₁₋₁₂ et C₁₋₅.

De la même manière, la ligne de connexion C₁₂₋₆ peut directement relier la sortie S₁₂ₐ et l'entrée E₆. Elle peut également relier la sortie S₁₂ₐ et l'entrée E₆ via la ligne de connexion C₅₋₆. Dans ce cas, la ligne de connexion C₁₂₋₆ est connectée à la ligne de connexion C₅₋₆.

D'autre part, la ligne de connexion C₁₇₋₉ peut directement relier la sortie S_{17b} et l'entrée E₉. Elle peut également relier la sortie S_{17b} et l'entrée E₉ via la ligne de connexion C₆₋₉. Dans ce cas, la ligne de connexion C₁₇₋₉ est connectée à la ligne de connexion C₆₋₉.

Le dispositif selon l'invention permet de dépolymériser la lignine de la liqueur noire par liquéfaction hydrothermale. Selon un mode de réalisation particulier, l'unité de liquéfaction hydrothermale comprend successivement un échangeur thermique, un dispositif de chauffage et un autoclave.

La présente invention concerne également un procédé de traitement de la liqueur noire issue de la fabrication de pâte à papier. Ce procédé comprend les étapes suivantes :
- dépolymérisation de la liqueur noire par liquéfaction hydrothermale ;
- obtention d'une phase aqueuse contenant des molécules organiques, et d'une phase organique ;
- séparation des molécules organiques contenues dans la phase aqueuse.

De manière générale, la phase organique est visqueuse. En outre, la liqueur noire correspond au liquide résiduel provenant de la fabrication de la pâte à papier, plus particulièrement dans un procédé alcalin. Elle contient généralement :
- de l'eau ;
- des espèces organiques, notamment de la lignine, éventuellement sous forme modifiée, et des carbohydrates éventuellement dégradés ;
- des espèces inorganiques, notamment des composés à base de sodium issus de la cuisson du bois par un procédé alcalin, par exemple des carbonates de sodium.

La liqueur noire comprend généralement 10 à 20% en poids de matière sèche, avantageusement 15 à 20%.

Dans la liqueur noire, le rapport massique entre les espèces organiques et les espèces inorganiques est généralement de l'ordre de 2/1.

La liqueur noire mise en oeuvre dans la présente invention provient avantageusement d'un procédé alcalin de cuisson du bois, notamment un procédé de cuisson à la soude NaOH. La liqueur noire est avantageusement non soufrée.

Le traitement par liquéfaction hydrothermale est endothermique. Il permet de transformer la liqueur noire en :
- une phase aqueuse contenant des molécules organiques ;
- une phase organique appelée « biocrude » valorisable énergétiquement ; et
- des gaz, notamment du dioxyde de carbone, représentant généralement moins de 1% du carbone de la liqueur noire.

La dépolymérisation de la liqueur noire, par liquéfaction hydrothermale, est avantageusement réalisée à une température comprise entre 200 et 370°C, plus avantageusement entre 220 et 320°C, et encore plus avantageusement entre 250 et 310°C.

D'autre part, elle est avantageusement réalisée à une pression comprise entre 5 et 25 MPa, la pression devant être supérieure à celle de vapeur saturante de l'eau pure à la même température.

Elle est avantageusement réalisée pendant une durée comprise entre 1 minute et 4 heures, plus avantageusement entre 15 minutes et 1 heure.

L'homme du métier saura adapter le couple pression/température pour assurer le maintien du milieu en phase liquide et en conditions sous critiques dans lesquelles l'eau se comporte à la fois comme un réactant et un solvant. La constante diélectrique de l'eau diminue de 78F.m⁻¹ dans les conditions ambiantes (25°C /1 bar, à 14 F.m⁻¹ à 350°C/20MPa (M. Uematsu et E. U. Franck, « Static Dielectric Constant of Water and Steam » Journal of Physical and Chemical Reference Data, 1980, vol. 9, n°4, pages 1291-1306). Ce changement de constante diélectrique augmente la solubilité des composés organiques hydrophobes dans l'eau, et diminue celle des sels inorganiques. En outre, le produit ionique de l'eau est environ 100 fois plus élevé en conditions sous critiques (10^{-11.2} à 250°C/50 bar et 10⁻¹² à 350°C/250 bar) qu'en conditions ambiantes (10⁻¹⁴ à 25°C /1 bar). La liquéfaction hydrothermale permet de tirer profit de ces propriétés.

La phase aqueuse issue de la liquéfaction hydrothermale est moins riche en matière organique que la liqueur noire. De manière avantageuse, elle comprend des composés phénoliques, avantageusement au moins un composé choisi dans le groupe comprenant le phénol, le gaïacol, le catéchol et le syringol.

L'homme du métier saura adapter les conditions de traitement par liquéfaction hydrothermale (température, pression et durée) en fonction notamment du résultat qu'il souhaite favoriser (bilan carbone de la phase aqueuse, nature des molécules organiques de la phase aqueuse) ou de la composition de la liqueur noire (nature, concentration...).

En adaptant les conditions de la liquéfaction hydrothermale, des molécules telles que le guaïacol peuvent être générées et récupérées. Le guaïacol est un produit de dégradation de la lignine, notamment la lignine de résineux. Il peut s'avérer particulièrement intéressant, étant donné qu'il s'agit d'un précurseur de la vanilline, composé couramment utilisé pour ses propriétés aromatisantes.

A titre d'exemple, un traitement par liquéfaction hydrothermale à une température inférieure à 300°C pendant une heure ou moins permet d'obtenir des molécules de type gaïacol et syringol. En revanche, un traitement à 310°C pendant 1 heure ne permet pas d'obtenir ce type de molécules, étant donné qu'elles sont déméthoxylées dans ces conditions. Afin d'obtenir préférentiellement du gaïacol et du syringol, une température de 250°C (5MPa) est conseillée. Afin d'obtenir préférentiellement du catéchol et du phénol, une température de 280°C (8MPa) est conseillée.

La liquéfaction hydrothermale (250°C/5MPa, 1 heure) d'une liqueur noire de résineux préhydrolysés permet d'obtenir 2% de guaïacol, par rapport au poids de la liqueur noire sèche. Dans ces conditions, pour une production moyenne de 1000 tonnes/jour de pâte à papier, soit environ 1500 tonnes/jour de liqueur noire sèche, la production de gaïacol peut atteindre jusqu'à 11 000 tonnes/an lorsque toute la liqueur noire est traitée par liquéfaction hydrothermale, et 1 100 tonnes/an lorsque seulement 10% de la liqueur noire est traitée par liquéfaction hydrothermale.

Contrairement à certains procédés de l'art antérieur, le traitement de la liqueur noire par liquéfaction hydrothermale selon l'invention ne mène pas uniquement à la formation de biocarburants. En effet, lorsqu'il est intégré dans un procédé de fabrication de pâte à papier, il permet également de recycler la phase aqueuse issue de liquéfaction hydrothermale et, le cas échéant, de régénérer le sodium provenant du traitement alcalin de cuisson du bois.

La présente invention concerne également un procédé de préparation de pâte à papier à partir de bois, comprenant le traitement d'au moins une partie de la liqueur noire par liquéfaction hydrothermale. Ce procédé comprend les étapes suivantes, réalisées dans un dispositif selon l'invention :
- cuisson du bois, avantageusement par un procédé alcalin avec préhydrolyse ;
- obtention de pâte à papier et d'une liqueur noire ;
- traitement d'au moins une partie de la liqueur noire par liquéfaction hydrothermale ;
- obtention d'une phase aqueuse contenant des molécules organiques et d'une phase organique ;
- optionnellement, injection dans une chaudière de la phase organique issue de la liquéfaction hydrothermale ;
- traitement de la phase aqueuse issue de la liquéfaction hydrothermale, par séparation des molécules organiques ;
- injection de la phase aqueuse traitée dans une unité de caustification. Cette dernière étape permet de régénérer les réactifs utilisés dans la cuisson du bois par un procédé alcalin.

Comme déjà indiqué, le bois utilisé peut être du bois préhydrolysé ou non. Le bois est avantageusement de type feuillus préhydrolysé, feuillus non préhydrolysé et résineux préhydrolysé.

La liquéfaction hydrothermale de la liqueur noire peut être réalisée en continu ou en discontinu. Elle peut ainsi être adaptée au procédé de cuisson du bois, celui-ci pouvant être continu ou discontinu.

En outre, la quantité de liqueur noire traitée par liquéfaction hydrothermale peut être ajustée, notamment en fonction des besoins énergétiques ou économiques de l'usine de fabrication de pâte à papier, mais aussi en fonction de l'efficacité de l'étape de régénération des réactifs de cuisson du bois par caustification.
Typiquement, le pourcentage de liqueur noire traité par liquéfaction hydrothermale est avantageusement compris entre 1 et 100%, plus avantageusement entre 5 et 15 %, en poids par rapport au poids de la liqueur noire issue de l'unité de cuisson.

Toutefois, et selon un mode de réalisation particulier, l'intégralité de la liqueur noire peut être traitée par liquéfaction hydrothermale. Dans ce cas, l'unité d'évaporation et la chaudière peuvent être supprimées du dispositif. Une quantité plus importante de molécules organiques peut alors être générée. Le traitement de la phase aqueuse résultant de la liquéfaction hydrothermale met éventuellement en oeuvre une étape de gazéification en eau supercritique ou une étape d'évaporation/combustion afin de traiter les composés organiques résiduels en phase aqueuse.

Selon un autre mode de réalisation particulier, la phase organique résultant de la liquéfaction hydrothermale est traitée de manière à récupérer, au moins en partie, les molécules organiques qu'elle contient. Quand bien même ce mode de réalisation diminue le rendement énergétique, il permet d'augmenter la production de molécules d'intérêt.

Néanmoins, et de manière avantageuse, la phase organique de la liquéfaction hydrothermale est valorisée par combustion dans la chaudière, avantageusement une chaudière de récupération. Elle peut également être redirigée vers une autre chaudière, par exemple une chaudière à écorce ne faisant pas partie du dispositif de préparation de pâte à papier.

Lorsque la liqueur noire est issue d'un procédé alcalin, la phase aqueuse provenant de la liquéfaction hydrothermale contient l'intégralité du sodium initialement contenu dans la liqueur noire traitée.

L'extraction des molécules organiques contenues dans la phase aqueuse permet non seulement de valoriser la liqueur noire, mais aussi de diminuer la concentration en composés organiques de la phase aqueuse.

Ainsi, la phase aqueuse issue de l'unité de séparation est réintégrée dans le circuit, avant l'étape de caustification.

De manière générale, l'étape de caustification permet de régénérer la soude utilisée dans un procédé alcalin. Il s'agit du traitement des résidus issus de la combustion de la liqueur noire, et dans le cas présent, de la phase aqueuse issue de la liquéfaction hydrothermale et après séparation des molécules organiques. Préalablement à l'étape de caustification, les résidus issus de la combustion sont dilués dans l'eau. De manière générale, la phase aqueuse résultant de la liquéfaction ne nécessite pas de dilution préalable à la caustification.

Selon un autre mode de réalisation particulier, la phase organique résultant de la liquéfaction hydrothermale est traitée de manière à récupérer, au moins en partie, les molécules organiques qu'elle contient. Quand bien même ce mode de réalisation diminue le rendement énergétique, il permet d'augmenter la production de molécules d'intérêt.

Les avantages liés à la présente invention incluent notamment :
- la production de molécules d'intérêt à partir de la lignine du bois contenue dans la liqueur noire, alors que, dans l'art antérieur, les composés phénoliques sont synthétisés à partir du pétrole ;
- la diminution de la quantité de matière organique introduite dans la chaudière, ce qui permet désengorger la chaudière, et donc d'augmenter la production de pâte à papier au sein d'une unité de production limitée par la capacité de sa chaudière ;
- l'intégration dans les procédés conventionnels d'une étape de valorisation de la liqueur noire par liquéfaction hydrothermale, permettant également le recyclage des phases organique et aqueuse résultantes ;
- la possibilité de combiner la liquéfaction hydrothermale de la liqueur noire avec les systèmes de recyclage du sodium conventionnels. Le dispositif selon l'invention peut ainsi être facilement intégré dans une usine de pâte à papier.

L'invention et les avantages qui en découlent ressortiront mieux des figures et des exemples suivants donnés afin d'illustrer l'invention et non de manière limitative.

### DESCRIPTION DES FIGURES

La figure 1 illustre un dispositif conventionnel de préparation de pâte à papier.
La figure 2 illustre un dispositif de préparation de pâte à papier selon un mode de réalisation particulier de l'invention.
La figure 3 illustre un dispositif de préparation de pâte à papier selon un mode de réalisation particulier de l'invention.

### DESCRIPTION DETAILLEE DE L'INVENTION

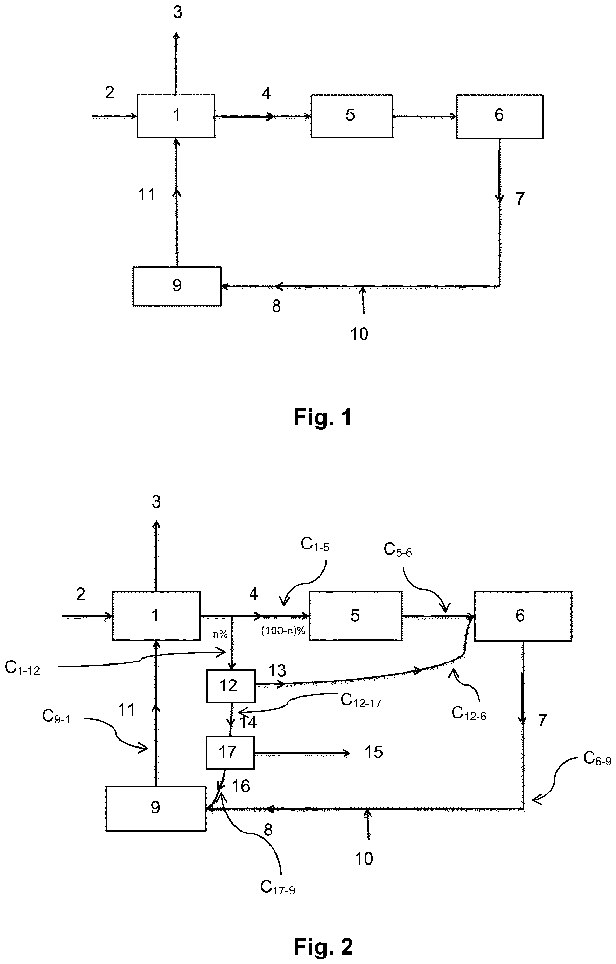

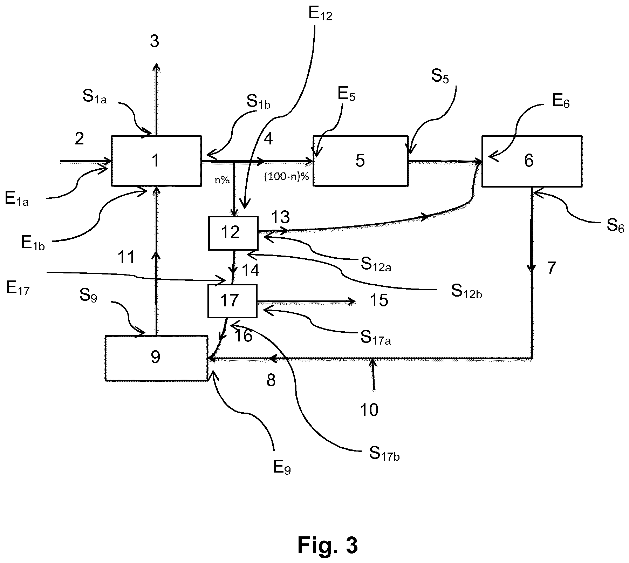

La description des unités et des connexions entre les unités des dispositifs selon les figures 2 et 3 sont applicables à tous les modes de réalisation de l'invention.

Un dispositif conventionnel (figure 1) permettant de préparer de la pâte à papier comprend généralement :
- une unité (1) de cuisson dans laquelle les constituants du bois ou du bois préhydrolysé (2) sont séparés en deux fractions :
   ▪ la pâte à papier (3), et
   ▪ la liqueur noire (4) ;
- une unité (5) d'évaporation permettant de concentrer la liqueur noire (4) ;
- une chaudière (6), notamment de type Tomlinson, dans laquelle la liqueur noire concentrée est brûlée, fournissant ainsi de la chaleur et de la vapeur au procédé de préparation de pâte à papier ;
- une unité de caustification (9) de la liqueur verte (8), la liqueur verte (8) correspondant aux résidus (7) de la combustion ayant lieu dans la chaudière (6) dilués dans de l'eau (10). L'unité de caustification (9) est connectée à l'unité (1) de combustion de manière à injecter la liqueur blanche (11) formée par passage de la liqueur verte (8) dans l'unité de caustification (9).

De manière générale, la chaudière (6) est avantageusement une chaudière de récupération de l'énergie thermique issue de la combustion de la liqueur noire dite chaudière Tomlinson. Comme déjà indiqué, elle génère de la vapeur et de la chaleur.

La combustion de la liqueur noire (4) dans la chaudière (6) génère des résidus (7) de combustion. Dans un procédé alcalin, il s'agit de sels fondus provenant de la cuisson de la liqueur blanche dans l'unité (1), notamment des sels alcalins de type carbonate de sodium. La solubilisation des résidus (7) dans de l'eau (10) permet de former la liqueur verte (8).

Dans l'unité (9) de caustification, la liqueur verte (8) est traitée pour régénérer les réactifs de la cuisson dans l'unité (1). Les réactifs régénérés peuvent être réinjectés dans l'unité (1) de cuisson, notamment en solution, sous la forme de la liqueur blanche (11). Dans un procédé alcalin, environ 97% du sodium initialement utilisé dans l'unité (1) de cuisson est généralement régénéré.
Outre les unités (1), (5), (6) et (9), le dispositif de préparation de pâte à papier selon l'invention comprend une unité (12) de liquéfaction hydrothermale et une unité (17) de séparation (figures 2 et 3).

Le dispositif de préparation de pâte à papier selon l'invention comprend :
- une unité (1) de cuisson des constituants du bois (2), comprenant une première entrée E₁ₐ, une deuxième entrée E_{1b}, une première sortie S₁ₐ et une deuxième sortie S_{1b} ;
- une unité (5) d'évaporation en aval de la sortie S_{1b} de l'unité (1) de cuisson, comprenant une entrée E₅ et une sortie S₅ ;
- une ligne de connexion C₁₋₅ entre la sortie S_{1b} et l'entrée E₅ ;
- une chaudière (6) en aval de la sortie S₅ de l'unité d'évaporation (5), comprenant une entrée E₆ et une sortie S₆ ;
- une ligne de connexion C₅₋₆ entre la sortie S₅ et l'entrée E₆ ;
- une unité de caustification (9) en aval de la sortie S₆ de la chaudière (6), comprenant une entrée E₉ et une sortie S₉, la sortie S₉ étant connectée à la deuxième entrée E_{1b} de l'unité (1) de cuisson ;
- une ligne de connexion C₆₋₉ entre la sortie S₆ et l'entrée E₉ ;
- une ligne de connexion C₉₋₁ entre la sortie S₉ et l'entrée E_{1b} ;
- une unité (12) de liquéfaction hydrothermale comprenant :
   ▪ une entrée E₁₂ connectée à la deuxième sortie S_{1b} de l'unité (1) de cuisson ;
   ▪ une première sortie S₁₂ₐ connectée à l'entrée E₆ de la chaudière (6) ;
   ▪ une deuxième sortie S_{12b} ;
- une ligne de connexion C₁₋₁₂ entre la sortie S_{1b} et l'entrée E₁₂ ;
- une ligne de connexion C₁₂₋₆ entre la sortie S₁₂ₐ et l'entrée E₆ ;
- une unité (17) de séparation en aval de la sortie S_{12b} de l'unité (12) de liquéfaction hydrothermale, comprenant :
   ▪ une entrée E₁₇ connectée à la sortie S_{12b} de l'unité (12) de liquéfaction hydrothermale ;
   ▪ une première sortie S₁₇ₐ ;
   ▪ une deuxième sortie S_{17b} connectée à l'entrée E₉ de l'unité (9) de caustification ;
- une ligne de connexion C₁₂₋₁₇ entre la sortie S_{12b} et l'entrée E₁₇ ;
- une ligne de connexion C₁₇₋₉ entre la sortie S_{17b} et l'entrée E₉.

Dans ce dispositif, l'entrée E₁ₐ correspond à l'entrée par laquelle le bois est introduit dans l'unité (1) de cuisson. L'entrée E₁ₐ correspond à l'entrée par laquelle la liqueur blanche, recyclée ou non, est introduite dans l'unité (1) de cuisson. Dans un procédé alcalin de traitement du bois, la liqueur blanche comprend généralement de l'eau, de la soude et éventuellement une source de soufre par exemple du sulfure de sodium. Comme déjà indiqué, ce traitement alcalin de cuisson du bois est généralement réalisé à une température comprise entre 150 et 180°C et à une pression comprise entre 7 et 9 bars. Selon un mode de réalisation préféré de l'invention, ce traitement alcalin est réalisé en l'absence de soufre.

La pâte à papier (3) et la liqueur noire (4) sont respectivement évacuées de l'unité (1) de cuisson via la sortie S₁ₐ et la sortie S_{1b}.

Pour plus de clarté, la figure 2 illustre les connexions Cᵢ₋ⱼ entre les différentes unités du dispositif selon l'invention alors que la figure 3 illustre les entrées Eₙ et les sorties Sₘ des différentes unités du dispositif selon l'invention.

Sur les figures 2 et 3, la ligne de connexion C₁₋₁₂ relie la sortie S_{1b} et l'entrée E₁₂ via une dérivation de la ligne de connexion C₁₋₅. En outre, la ligne de connexion C₁₂₋₆ relie la sortie S₁₂ₐ et l'entrée E₆ via la ligne de connexion C₅₋₆, et la ligne de connexion C₁₇₋₉ relie la sortie S_{17b} et l'entrée E₉ via la ligne de connexion C₆₋₉.

Sur les figures 2 et 3, l'unité (12) de liquéfaction hydrothermale est positionnée en dérivation, en aval de l'unité (1) de cuisson et en amont de l'unité (5) d'évaporation. Elle permet de traiter au moins une partie de la liqueur noire (4), n% en poids, alors que l'autre partie de la liqueur noire (4), (100-n)% en poids, est concentrée dans l'unité (5).

Dans l'unité (12) de liquéfaction hydrothermale, n% en poids de la liqueur noire (4) sont traités. Ce traitement permet d'obtenir :
- une fraction (13) correspondant à une phase organique (généralement visqueuse), qui est avantageusement réinjectée en amont de la chaudière (6) mais en aval de l'unité (5) d'évaporation,
- une fraction (14) correspondant à une phase aqueuse contenant des molécules organiques (15).

Les molécules organiques (15) sont ensuite séparées de la phase aqueuse (14) dans le séparateur (17). Les techniques conventionnelles de séparation peuvent être utilisées, notamment la filtration et/ou la décantation.

La phase aqueuse (16) résultant de cette séparation est avantageusement réinjectée dans le dispositif, par exemple en amont de l'unité (9) de caustification (figures 2 et 3). La phase aqueuse (16) peut être réinjectée directement dans l'unité (9) de caustification, ou dans la liqueur verte (8) ou mélangée avec les résidus (7) avant introduction de l'eau (10).

De manière générale, l'unité (12) de liquéfaction hydrothermale peut comprendre successivement un échangeur thermique, un dispositif de chauffage et un autoclave.

L'échangeur thermique permet d'assurer le préchauffage de la liqueur noire jusqu'à atteindre une température de 150 à 250°C. L'échangeur thermique assure le transfert de chaleur entre le fluide entrant (liqueur noire (4)) et le fluide sortant de l'autoclave (phase aqueuse (14) et/ou phase organique (13)). Ainsi, la liqueur noire (4) entrant est chauffée grâce au fluide sortant (14 et/ou 13) qui est refroidi.

Le dispositif de chauffage de l'unité de liquéfaction hydrothermale permet de chauffer la liqueur noire préchauffée à la température de fonctionnement de l'autoclave, en général entre 200 et 370°C. Il s'agit généralement d'un chauffage électrique ou par combustion.

Grâce à l'échangeur thermique, qui a donc une double fonction préchauffage/ refroidissement, la température du fluide sortant (14 et/ou 13) de l'autoclave peut passer de plus de 300°C à moins de 100°C, avantageusement entre 50 et 80°C. La température est choisie pour conserver une fluidité suffisante en sortie de l'autoclave et après passage dans l'échangeur thermique.

Selon un mode de réalisation, seule la phase aqueuse (14) passe dans l'échangeur thermique. C'est notamment le cas lorsque la phase organique (14) est dirigée vers la chaudière (6).

Une fois traitée par liquéfaction hydrothermale dans le réacteur, la liqueur noire (4) comprend une phase aqueuse (14) et une phase organique (13) qui est généralement visqueuse.

La phase aqueuse (14), est ensuite traitée dans le séparateur (17) pour isoler les molécules organiques (15) qu'elle contient. Cette séparation peut notamment être réalisée par décantation.

Comme déjà indiqué, la phase aqueuse (16) résultant de cette séparation est réinjectée, directement ou indirectement, dans l'unité (9) de caustification.

### EXEMPLES DE REALISATION DE L'INVENTION

Les exemples suivants concernent le traitement selon l'invention de différentes liqueurs noires. Ces exemples incluent :
a) le bilan carbone de la liquéfaction hydrothermale,
b) le bilan sodium de la liquéfaction hydrothermale,
c) la composition de la phase aqueuse résultant de la liquéfaction hydrothermale, et
d) le bilan énergétique de la liquéfaction hydrothermale.

### a) Bilan carbone de la liquéfaction hydrothermale

La liqueur noire issue de la cuisson d'un mélange de feuillus préhydrolysés a été traitée par liquéfaction hydrothermale selon l'invention.

Avant ce traitement, la liqueur noire présente les caractéristiques suivantes :
- matière sèche : 18% en poids,
- densité : 1.09,
- concentration en carbone : 71.8 gc/L,
- concentration en sodium : 26.5 g_{Na}/L.

La liquéfaction hydrothermale de la liqueur noire a été réalisée à 280°C, à une pression de 7 MPa) pendant 1 heure de palier (réacteur batch).

97.7% du carbone introduit a été récupéré, 59.7% étant dans la phase aqueuse et 38% dans la phase organique.

### b) Bilan sodium de la liquéfaction hydrothermale

Le bilan sodium correspond à la moyenne des bilans sodium de 14 essais réalisés à des températures comprises entre 250 et 310°C, pendant une durée comprise entre 5 et 120 minutes, et à différentes concentrations (concentration initiale, dilutions x2 et x4).
De manière générale, 97.3% du sodium a été récupéré dans la phase aqueuse issue de la liquéfaction hydrothermale.

Par conséquent, le bilan en sodium n'est pas impacté par l'intégration de l'étape de liquéfaction hydrothermale.

### c) Composition de la phase aqueuse issue de la liquéfaction hydrothermale

Les molécules organiques produites lors de la liquéfaction hydrothermale et présentes dans la phase aqueuse ont été identifiées par analyse GCMS (chromatographie en phase gazeuse couplée à la spectrométrie de masse) et quantifiées par HPLC (chromatographie liquide sous haute pression) (tableau 1).

Les molécules dont la concentration est la plus importante sont : phénol, catéchol, gaïacol et syringol.

**Tableau 1 : influence de la nature de la liqueur noire et des conditions opératoires sur la nature et la quantité de molécules organiques contenues dans la phase aqueuse.**

| Liqueur noire^{(a)} | Conditions | rendement phénol | rendement catéchol | rendement gaïacol | rendement syringol | Total |
|---|---|---|---|---|---|---|
| | | (% en poids par rapport au poids de la liqueur noire introduite) | | | | |
| feuillus préhydrolysés | 250°C / 5MPa 1 heure | 0.0% | 0.2% | 1.2% | 1.4% | 2.8% |
| résineux préhydrolysés | 250°C/ 5MPa 1 heure | 0.0% | 0.1% | 2.0% | 0.0% | 2.0% |
| feuillus non préhydrolysés | 250°C/ 5MPa 1 heure | 0.3% | 0.2% | 0.8% | 1.1% | 2.3% |
| feuillus préhydrolysés | 280°C/ 7MPa 1 heure | 0.1% | 1.0% | 0.7% | 0.04% | 1.8% |
| résineux préhydrolysés | 280°C/ 7MPa 1 heure | 0.1% | 0.7% | 1.0% | 0.00% | 1.7% |
| feuillus non préhydrolysés | 280°C/ 7MPa 1 heure | 0.4% | 0.8% | 0.4% | 0.03% | 1.6% |
| feuillus préhydrolysés | 310°C/ 10MPa 1 heure | 0.1% | 0.6% | 0.2% | 0.00% | 0.9% |
| résineux préhydrolysés | 310°C/ 10MPa 1 heure | 0.2% | 0.4% | 0.2% | 0.00% | 0.7% |
| feuillus non préhydrolysés | 310°C/ 10MPa 1 heure | 0.6% | 0.5% | 0.0% | 0.00% | 1.1% |

| | | | | | | |
|---|---|---|---|---|---|---|
| ^{(a)} liqueurs noires issues d'un procédé de cuisson soude (sans soufre), précédé ou non par une préhydrolyse, à partir d'un mélange de bois de feuillus ou de bois de résineux | | | | | | |

Le tableau 1 montre que les conditions opératoires et la nature de la liqueur noire peuvent avoir une importante influence sur la nature et la quantité des molécules contenues dans la phase aqueuse. Par exemple, la température semble favoriser la déméthoxylation du gaïacol et du syringol. Par conséquent, le rendement de ces composés peut être amélioré dans des conditions douces (250°C vs 310°C par exemple).

### d) Bilan énergétique de la liquéfaction hydrothermale

Le bilan énergétique a été effectué dans le cas de liqueur noire soude de feuillus préhydrolysée, à 280°C, 7MPa et pendant 1 heure de palier.

Ce bilan énergétique correspond au traitement de 1kg de liqueur noire :
- environ 1000 kJ sont nécessaires pour chauffer 1kg de liqueur noire de 20°C à 280°C (en considérant que la chaleur spécifique de la liqueur noire est égale à celle de l'eau) ;
- la phase organique (biocrude) issue de la liquéfaction hydrothermale de la liqueur noire contient 40% d'humidité et peut directement subir une combustion, permettant de récupérer 1950 kJ ;
- l'évaporation de l'eau résiduelle de la phase organique nécessite 60 kJ.

Ainsi, la combustion de la phase organique issue de la liquéfaction hydrothermale permet de récupérer une quantité d'énergie plus importante que celle dépensée lors de la liquéfaction hydrothermale.

## Revendications

1. Dispositif de préparation de pâte à papier comprenant :
- une unité (1) de cuisson des constituants du bois (2) dans laquelle les constituants du bois sont séparés en deux fractions :
∘ de la pâte à papier (3),
∘ de la liqueur noire (4),
l'unité (1) de cuisson comprenant une première entrée E₁ₐ par laquelle du bois est introduit, une deuxième entrée E_{1b} par laquelle de la liqueur blanche est introduite, une première sortie S₁ₐ permettant d'évacuer la pâte à papier et une deuxième sortie S_{1b} permettant d'évacuer la liqueur noire ;
- une unité (12) de liquéfaction hydrothermale permettant de traiter au moins une partie de la liqueur noire, et comprenant :
▪ une entrée E₁₂ de la liqueur noire, connectée à la deuxième sortie S_{1b} de l'unité (1) de cuisson ;
▪ une première sortie S₁₂ₐ d'une phase organique (13) issue de la liquéfaction hydrothermale ;
▪ une deuxième sortie S_{12b} d'une phase aqueuse (14) issue de la liquéfaction hydrothermale et contenant des molécules organiques (15) ;
- une ligne de connexion C₁₋₁₂ entre la sortie S_{1b} et l'entrée E₁₂ ;
- une unité (17) de séparation en aval de la sortie S_{12b} de l'unité (12) de liquéfaction hydrothermale, l'unité de séparation permettant de séparer les molécules organiques (15) contenues dans la phase aqueuse (14) issue de la liquéfaction hydrothermale, et comprenant :
▪ une entrée E₁₇ de la phase aqueuse issue de la liquéfaction hydrothermale, connectée à la sortie S_{12b} de l'unité (12) de liquéfaction hydrothermale ;
▪ une première sortie S₁₇ₐ des molécules organiques (15) ;
▪ une deuxième sortie S_{17b} d'une phase aqueuse (16) ;
- une ligne de connexion C₁₂₋₁₇ entre la sortie S_{12b} et l'entrée E₁₇ ;
- une unité de caustification (9) comprenant une entrée E₉ de la phase aqueuse (16) et une sortie S₉ d'une liqueur blanche (11), la sortie S₉ étant connectée à la deuxième entrée E_{1b} de l'unité (1) de cuisson ;
- une ligne de connexion C₁₇₋₉ entre la sortie S_{17b} et l'entrée E₉ ;
- une ligne de connexion C₉₋₁ entre la sortie S₉ et l'entrée E_{1b}.

2. Dispositif de préparation de pâte à papier selon la revendication 1, ***caractérisé* en ce qu'**il comprend en outre :
- une unité (5) d'évaporation en aval de la sortie S_{1b} de l'unité (1) de cuisson, l'unité d'évaporation permettant de concentrer la liqueur noire (4), et comprenant une entrée E₅ de la liqueur noire (4) issue de l'unité (1) de cuisson et une sortie S₅ de la liqueur noire concentrée dans l'unité d'évaporation ;
- une ligne de connexion C₁₋₅ entre la sortie S_{1b} et l'entrée E₅ ;
- une chaudière (6) en aval de la sortie S₅ de l'unité d'évaporation (5), la chaudière permettant de brûler la liqueur noire concentrée, et comprenant une entrée E₆ de la liqueur noire concentrée et une sortie S₆ de résidus (7) de combustion ;
- une ligne de connexion C₅₋₆ entre la sortie S₅ et l'entrée E₆ ;
- l'unité de caustification (9) en aval de la sortie S₆ de la chaudière (6), comprenant l'entrée E₉ de la phase aqueuse (16) et d'une liqueur verte (8) contenant les résidus (7) de combustion et une sortie S₉ d'une liqueur blanche (11), la sortie S₉ étant connectée à la deuxième entrée E_{1b} de l'unité (1) de cuisson ;
- une ligne de connexion C₆₋₉ entre la sortie S₆ et l'entrée E₉ ;
- une ligne de connexion C₁₂₋₆ entre la sortie S₁₂ₐ et l'entrée E₆.

3. Dispositif de préparation de pâte à papier selon la revendication 2, ***caractérisé* en ce que** la ligne de connexion C₁₂₋₆ relie la sortie S₁₂ₐ et l'entrée E₆ via la ligne de connexion C₅₋₆.

4. Dispositif selon la revendication 2 ou 3, ***caractérisé* en ce que** la ligne de connexion C₁₇₋₉ relie la sortie S_{17b} et l'entrée E₉ via la ligne de connexion C₆₋₉.

5. Dispositif selon l'une des revendications 1 à 4, ***caractérisé* en ce que** l'unité (12) de liquéfaction hydrothermale comprend successivement un échangeur thermique, un dispositif de chauffage et un autoclave.

6. Procédé de préparation de pâte à papier à partir de bois, comprenant les étapes suivantes dans un dispositif selon l'une des revendications 1 à 5 :
- cuisson du bois ;
- obtention de pâte à papier et d'une liqueur noire ;
- traitement d'au moins une partie de la liqueur noire par liquéfaction hydrothermale ;
- obtention d'une phase aqueuse contenant des molécules organiques et d'une phase organique ;
- traitement de la phase aqueuse issue de la liquéfaction hydrothermale, par séparation des molécules organiques ;
- injection de la phase aqueuse traitée dans une unité de caustification.

7. Procédé selon la revendication 6, ***caractérisé* en ce que** le traitement d'au moins une partie de la liqueur noire comprend les étapes suivantes :
- dépolymérisation de la liqueur noire par liquéfaction hydrothermale ;
- obtention d'une phase aqueuse contenant des molécules organiques et d'une phase organique ;
- séparation des molécules organiques de la phase aqueuse.

8. Procédé selon la revendication 7, ***caractérisé* en ce que** la dépolymérisation de la liqueur noire est réalisée à une température comprise entre 200 et 370°C et à une pression comprise entre 5 et 25 MPa.

9. Procédé selon la revendication 7 ou 8, ***caractérisé* en ce que** la dépolymérisation de la liqueur noire est réalisée pendant une durée comprise entre 1 minute et 4 heures.

10. Procédé selon l'une des revendications 7 à 9, ***caractérisé* en ce que** la phase aqueuse issue de la liquéfaction hydrothermale comprend des composés phénoliques, avantageusement au moins un composé choisi dans le groupe comprenant le phénol, le gaïacol, le catéchol et le syringol.

## Patentansprüche

1. Vorrichtung zur Herstellung von Zellstoff, umfassend:
- eine Kocheinheit (1) für die Holzkomponenten (2), in der die Holzkomponenten in zwei Fraktionen geteilt werden:
o Zellstoff (3)
o Schwarzlauge (4),
- die Kocheinheit (1) umfasst einen ersten Einlass E₁ₐ, durch den Holz zugeführt wird, einen zweiten Einlass E_{1b}, durch den Weisslauge zugeführt wird, ein erster Auslass S₁ₐ, über den der Zellstoff entfernt werden kann und ein zweiter Auslass S_{1b}, über dem die Schwarzlauge entfernt werden kann;
- eine hydrothermale Verflüssigungseinheit (12), in der zumindest ein Teil der Schwarzlauge behandelt werden kann, diese umfasst:
• Einlass E₁₂ für Schwarzlauge, verbunden mit dem zweiten Auslass S_{1b} der Kocheinheit (1);
• ein erster Auslass S₁₂ₐ einer organischen Phase (13), die aus der hydrothermalen Verflüssigung stammt;
• ein zweiter Auslass S_{12b} einer wässrigen Phase (14), die aus der hydrothermalen Verflüssigung stammt und organische Moleküle enthält (15);
- eine Verbindungsleitung C₁₋₁₂ zwischen dem Auslass S_{1b} und dem Einlass E₁₂;
- eine Trenneinheit (17) nachgeschaltet nach Auslass S_{12b} der hydrothermalen Verflüssigungseinheit (12), mit der Trenneinheit können die organischen Moleküle (15), die in der wässrigen Phase (14) aus der hydrothermalen Verflüssigung enthalten sind, abgeschieden werden, und diese umfasst:
• einen Einlass E₁₇ für die wässrige Phase aus der hydrothermalen Verflüssigung, verbunden mit dem Auslass S_{12b} der hydrothermalen Verflüssigungseinheit (12);
• ein erster Auslass S₁₇ₐ für die organischen Moleküle (15);
• ein zweiter Auslass S_{17b} für die wässrige Phase (16);
- eine Verbindungsleitung C₁₂₋₁₇ zwischen dem Auslass S_{12b}, und dem Einlass E₁₇;
- eine Kaustifizierungsanlage (9) mit einem Einlass E₉ für die wässrige Phase (16) und ein Auslass S₉ für die Weisslauge (11), der Auslass S₉ ist verbunden mit dem zweiten Einlass E_{1b} der Kocheinheit (1);
- eine Verbindungsleitung C₁₇₋₉ zwischen dem Auslass S_{17b}, und dem Einlass E₉;
- eine Verbindungsleitung C₉₋₁ zwischen dem Auslass S₉ und dem Einlass E_{1b};

2. Vorrichtung zur Herstellung von Zellstoff gemäß Anspruch 1, **dadurch gekennzeichnet, dass** sie außerdem umfasst:
- eine Verdampfereinheit (5) nachgeschaltet nach Aulass S_{1b} der Kocheinheit (1), diese Verdampfereinheit ermöglicht die Konzentration der Schwarzlauge (4) und umfasst einen Einlass E₅ der Schwarzlauge (4), aus der Kocheinheit (1) und einen Auslass S₅ für die in der Verdampfereinheit konzentrierten Schwarzlauge;
- eine Verbindungsleitung C₁₋₁₅ zwischen dem Auslass S_{1b}, und dem Einlass E₅;
- ein Heizkessel (6), nachgeschaltet nach Auslass S₅, der Verdampfereinheit (5), wobei in diesem Heizkessel die konzentrierte Schwarzlauge verbrannt werden kann, und der einen Einlass E₆ für konzentrierte Schwarzlauge und einen Auslass S₆ für Verbrennungsrückstände (7) umfasst;
- eine Verbindungsleitung C₅₋₆ zwischen dem Auslass S₅ und dem Einlass E₆;
- die Kaustifizierungsanlage (9), nachgeschaltet nach Auslass S₆ des Heizkessels (6) umfasst den Einlass E₉ der wässrigen Phase (16) und einer Grünlauge (8), die die Verbrennungsrückstände (7) enthält und einen Auslass S₉ für eine Weisslauge (11), der Auslass S₉ ist mit dem zweiten Einlass E_{1b} der Kocheinheit (1) verbunden;
- eine Verbindungsleitung C₆₋₉ zwischen dem Auslass S₆, und dem Einlass E₉;
- eine Verbindungsleitung C₁₂₋₆ zwischen dem Auslass S₁₂ₐ und dem Einlass E₆;

3. Vorrichtung zur Herstellung von Zellstoff, gemäß Anspruch 2, **dadurch gekennzeichnet, dass** die Verbindungsleitung C₁₂₋₁₆ den Auslass S₁₂ₐ und den Einlass E₆ über die Verbindungsleitung C₅₋₆ verbindet.

4. Vorrichtung gemäß Anspruch 2 oder 3, **dadurch gekennzeichnet, dass** die Verbindungsleitung C₁₇₋₉ den Auslass S_{17b} und den Einlass E₉ über die Verbindungsleitung C₆₋₉ verbindet.

5. Vorrichtung gemäß einem der Ansprüche 1 bis 4, **dadurch gekennzeichnet, dass** die hydrothermale Verflüssigungseinheit (12) aufeinanderfolgend einen Wärmetauscher, ein Heizgerät und einen Autoklav umfasst.

6. Verfahren zur Herstellung von Zellstoff aus Holz, das die folgenden Schritte umfasst, in einer Vorrichtung gemäß einem der Ansprüche 1 bis 5:
- Kochen des Holzes;
- Erhalt von Zellstoff und einer Schwarzlauge;
- Behandlung mindestens eines Teils der Schwarzlauge durch hydrothermale Verflüssigung;
- Erhalt einer organische Moleküle enthaltenden wässrigen Phase und einer organischen Phase;
- Behandlung der wässrigen Phase aus der hydrothermalen Verflüssigung durch Abtrennung der organischen Moleküle;
- Einspritzen der behandelten wässrigen Phase in eine Kaustifizierungsanlage.

7. Verfahren gemäß Anspruch 6 **dadurch gekennzeichnet, dass** die Behandlung mindestens eines Teils der Schwarzlauge die folgenden Schritte umfasst:
- Depolymerisation der Schwarzlauge durch hydrothermale Verflüssigung;
- Erhalt einer organische Moleküle enthaltenden wässrigen Phase und einer organischen Phase;
- Abtrennung der organischen Moleküle der wässrigen Phase.

8. Verfahren gemäß Anspruch 7, **dadurch gekennzeichnet, dass** die Depolymerisation der Schwarzlauge bei einer Temperatur zwischen 200 und 370°C und einem Druck zwischen 5 und 25 MPa durchgeführt wird.

9. Verfahren gemäß Anspruch 7 oder 8, **dadurch gekennzeichnet, dass** die Depolymerisation der Schwarzlauge während einer Zeitspanne zwischen 1 Minute und 4 Stunden durchgeführt wird.

10. Verfahren gemäß einem der Ansprüche 7 bis 9, **dadurch gekennzeichnet, dass** die wässrige Phase aus der hydrothermalen Verflüssigung Phenolverbindungen enthält, vorteilhafterweise mindestens eine Verbindung, aus der Gruppe mit Phenol, Guajacol, Brenzcatechin und Syringol.

## Claims

1. A paper pulp preparation device comprising:
- a unit (1) for cooking wood components (2), in which the wood components are separated into two fractions:
▪ paper pulp (3), and
▪ black liquor (4);
the unit (1) for cooking comprising a first inlet E₁ₐ for introducing wood, a second inlet E_{1b} for discharging while liquor, a first outlet S₁ₐ for discharging the paper pulp, and a second outlet S_{1b} for discharging the black liquor;
- a hydrothermal liquefaction unit (12) allowing the treatment of at least a part of the black liquor, and comprising:
▪ an inlet E₁₂ for the black liquor connected to second outlet S_{1b} of the cooking unit (1);
▪ a first outlet S₁₂ₐ for an organic phase (13) resulting from the hydrothermal liquefaction;
▪ a second outlet S_{12b} for an aqueous phase (14) resulting from the hydrothermal liquefaction and containing organic molecules (15);
- a connection line C₁₋₁₂ between outlet S_{1b} and inlet E₁₂;
- a separation unit (17) downstream of outlet S_{12b} of the hydrothermal liquefaction unit (12), the separation unit allowing the separation of organic molecules (15) contained in the aqueous phase (14) resulting from the hydrothermal liquefaction, and comprising:
▪ an inlet E₁₇ for the aqueous phase resulting from the hydrothermal liquefaction, connected to outlet S_{12b} of the hydrothermal liquefaction unit (12);
▪ a first outlet S₁₇ₐ of organic molecules (15);
▪ a second outlet S_{17b} of aqueous phase (16);
- a connection line C₁₂₋₁₇ between outlet S_{12b} and inlet E₁₇;
- a causticizing unit (9) comprising an inlet E₉ of the aqueous phase (16) and an outlet S₉ for a white liquor (11), outlet S₉ being connected to second inlet E_{1b} of the cooking unit (1);
- a connection line C₁₇₋₉ between outlet S_{17b} and inlet E₉;
- a connection line C₉₋₁ between outlet S₉ and inlet E_{1b}.

2. The paper pulp preparation device of claim 1, ***characterized* in that** it further comprises:
- an evaporation unit (5) downstream of outlet S_{1b} of the cooking unit (1), the evaporation unit allowing to concentrate the black liquor (4), and comprising an inlet E₅ for the black liquor (4) resulting from cooking unit (1) and an outlet S₅ of the black liquor concentrated in the evaporation unit;
- a connection line C₁₋₅ between outlet S_{1b} and inlet E₅;
- a boiler (6) downstream of outlet S₅ of the evaporation unit (5), the boiler allowing to burn the concentrated black liquor, and comprising an inlet E₆ for the concentrated black liquor and an outlet S₆ for residues (7) of the combustion;
- a connection line C₅₋₆ between outlet S₅ and inlet E₆;
the causticizing unit (9) downstream of outlet S₆ of the boiler (6), comprising the inlet E₉ofor the aqueous phase (16) and for a green liquor (8) containing the residues (7) of the combustion and an outlet S₉ for a white liquor (11), outlet S₉ being connected to second inlet E_{1b} of the cooking unit (1);
- a connection line C₆₋₉ between outlet S₆ and inlet E₉;
- a connection line C₁₂₋₆ between outlet S₁₂ₐ and inlet E₆.

3. The paper pulp preparation device of claim 2, ***characterized* in that** connection line C₁₂₋₆ connects outlet S₁₂ₐ and inlet E₆ via connection line C₅₋₆.

4. The device of claim 2 or 3, ***characterized* in that** connection line C₁₇₋₉ connects output S_{17b} and input E₉ via connection line C₆₋₉.

5. The device of any of claims 1 to 4, ***characterized* in that** the hydrothermal liquefaction unit (12) successively comprises a heat exchanger, a heating device, and an autoclave.

6. A method of preparing paper pulp from wood, comprising the steps of, in the device of any of claims 1 to 5:
- cooking the wood;
- obtaining paper pulp and a black liquor;
- treating at least part of the black liquor by hydrothermal liquefaction;
- obtaining an aqueous phase containing organic molecules and an organic phase;
- treating the aqueous phase resulting from the hydrothermal liquefaction, by separation of the organic molecules;
- injecting the treated aqueous phase into a causticizing unit.

7. The method of claim 6, ***characterized* in that** at least part of the black liquor is treated according to the following steps of:
- depolymerizing the black liquor by hydrothermal liquefaction;
- obtaining an aqueous phase containing organic molecules and an organic phase;
- separating the organic molecules of the aqueous phase.

8. The method of claim 7, ***characterized* in that** the depolymerization of the black liquor is performed at a temperature in the range from 200 to 370°C and at a pressure in the range from 5 to 25 MPa.

9. The method of claim 7 or 8, ***characterized* in that** the depolymerization of the black liquor is carried out for a time period in the range from 1 minute to 4 hours.

10. The method of any of claims 7 to 9, ***characterized* in that** the aqueous phase resulting from the hydrothermal liquefaction comprises phenol compounds, advantageously at least one compound selected from the group comprising phenol, guaiacol, catechol, and syringol.
